# EUROPEAN PATENT APPLICATION

(11) **EP 4 104 653 A1**
(43) Date of publication of application: **21.12.2022**
(21) Application number: 21179324.5
(22) Date of filing: 14.06.2021
(51) Int. Cl.: A01B 19/10, E01C 23/08, A01B 49/02, A01B 69/00

(54) **EQUESTRIAN HARROWING ROBOT**

(71) Applicant: Equestrian Technology, 1360 Perwez (BE)
(72) Inventor: Massart, Loïc, 1315 Incourt (BE); Convent, Lionel, 1300 Wavre (BE); Everarts, Christophe, 1300 Wavre (BE); Debetencourt, Sam, 1300 Wavre (BE)
(74) Representative: Calysta NV

(57) **Abstract**

Harrowing robot for harrowing a soil of an indoor or outdoor animal or sport arena, such as an equestrian soil, comprising a harrowing mechanism, comprising: a breaking element configured to break up the equestrian soil; a drive mechanism configured to move the breaking element between a plurality of positions comprising at least: a first soil engaging position wherein the breaking element is configured to be at a first breaking depth in the soil, and a second soil engaging position wherein the breaking element is configured to be at a second breaking depth in the soil, wherein the first breaking depth differs from the second breaking depth; a control unit configured to control the drive mechanism for moving the breaking element between said plurality of positions.

## Description

The present invention relates to the technical field of harrowing, in particular harrowing a soil of an indoor or outdoor animal or sport arena, e.g. equestrian soils or soils used in bull arenas. The invention is envisaged to be for example applied in non-agricultural harrowing applications.

Such soils are e.g. used for horse trainings or competitions such as jumping or dressage. The horse will walk, run, trot or canter over the soil during the daily training or during competitions. It is preferred that the soil is relatively flat to make sure the horse is not hindered by uneven soils, or that the soil is of the right hardness. However, in practice the soil can become uneven for several reasons, e.g. due to the activity of the horse itself or due to machinery that is used to arrange jumping obstacles on the soil. It is also possible that clumps of soil are formed or that a top layer of the soil is harder than preferred.

It is known to harrow the soil to improve the soil. Traditionally, harrowing mechanisms have been attached to man-operated vehicles. In such cases, the harrowing mechanism drags behind said vehicle to harrow the soil while an operator drives the vehicle over the soil.

It is an object of the invention to provide an improved solution for harrowing, in particular for harrowing a soil of an indoor or outdoor animal or sport arena, e.g. equestrian soils. It is in particular an object to provide a harrowing robot which can harrow autonomously on different soils. It is alternatively an object of the invention to at least provide an alternative for the prior art.

One or more of the objects of the invention are achieved with a harrowing mechanism, comprising a breaking element configured to break up and/or soften the soil. Optionally the harrowing mechanism comprises a grader element and/or a final grader element configured to flatten and/or grade the soil broken up by the breaking element.

The breaking element can for example comprises a series of protrusions, such as spikes, teeth or chains, which are arranged parallel next to each other. The breaking element, e.g. the protrusions, is/are configured to be arranged partly into the soil during use, such that they move through the soil while the harrowing arrangement is moved for breaking up the soil. The breaking element is in particular useful for breaking up lumps of soil or hardened parts of compressed soil, which may e.g. be formed by the hooves of a horse or by machinery driving over the soil. The protrusions may be connected to a breaking element holder by means of resilient or spring-like elements for allowing some movement of the protrusions during use. Optionally the breaking element may comprise multiple, e.g. two, three, four, or more, rows of protrusions, wherein e.g. the protrusions of the subsequent rows, e.g. the protrusions of the first row and the protrusions or the second row, are arranged alternately when seen in a direction of the width of a harrowing robot. Optionally the protrusions may be connected to a breaking element holder in pairs of two.

The breaking element may make the soil uneven and loose, which despite improving the soil may one the one hand be inconvenient for a horse to walk, run, trot or canter over, and on the other hand not be aesthetically pleasing. In embodiments, the harrowing mechanism may therefore comprise a grader element configured to flatten to soil. Thus, the grader element engages the broken up or softened soil for flattening it. The grader element may e.g. be a plate, e.g. a curved plate, a chain, or a metal rod. The grader element may be arranged behind the breaking element when seen in a driving direction.

In embodiments, the harrowing mechanism may be arranged on a harrowing robot, preferably a harrowing robot for harrowing a soil of an indoor or outdoor animal or sport arena, e.g. equestrian soils. For example, the harrowing robot may be an equestrian harrowing robot for harrowing an equestrian soil. Preferably, the harrowing robot is configured to drive and/or harrow autonomously. A robot has the advantage that it can harrow without the need of an operator to drive the harrowing mechanism around. The operational cost can therefore be reduced, and in addition it is possible to harrow during times that usual the operator is not available, e.g. at night between two consecutive days of horse riding on the equestrian soil.

In embodiments, the harrowing mechanism further comprises a drive mechanism configured to move the breaking element between a plurality of positions. For example, the plurality of positions may comprise at least a first soil engaging position wherein the breaking element is configured to be at a first breaking depth in the soil, and a second soil engaging position wherein the breaking element is configured to be at a second breaking depth in the soil, wherein the first breaking depth differs from the second breaking depth. The preferred breaking depth may depend on the type of soil, or even within a single soil on how hard the soil is compressed or hard the lumps of soil are in each region of said single soil. Advantageously, this embodiment allows to arrange breaking element at different breaking depths. In further embodiments, the plurality of positions may comprise a third soil engaging position wherein the breaking element is configured to be at a third breaking depth in the soil, and optionally a fourth soil engaging position wherein the breaking element is configured to be at a fourth breaking depth in the soil. For example, the plurality of positions may entail that the breaking element can be moved within a moving range, e.g. of 5 centimetre, between a maximal position and a minimal position, wherein the breaking element can be moved continuously or in increments, e.g. in increments of millimetres. The drive mechanism may e.g. comprise one or more motors, e.g. electrical motors, for moving the breaking element and other moveable components of the harrowing mechanism when applicable.

In embodiments, the harrowing mechanism further comprises a control unit.

In embodiments, said control unit can be configured to control the drive mechanism for moving the breaking element between said plurality of positions. For example, the control unit may be configured to transmit a control signal to the drive mechanism for moving the breaking element. Thus, the drive mechanism is controlled by the control unit. There is no need for an operator to move the breaking element manually between the plurality of positions. This allows the harrowing mechanism to be used advantageously in a harrowing robot which can harrow autonomously without requiring interaction of the operator. However, also when the harrowing mechanism is used in an embodiment wherein it is connected to a man-operated vehicle this embodiment is advantageous, because the operator is no longer required to get out of the driving seat for moving the breaking element between the plurality of positions.

In embodiments, the plurality of positions may comprise a soil disengaging position, preferably in addition to the first soil engaging position and optionally also the second soil engaging position and optionally further soil engaging positions. In the soil disengaging position the breaking element is configured to be disengaged from the soil. Thus, the soil is not being broken up. This can in particular be useful when the harrowing mechanism gets stuck in a soil that is too rough to be broken up, orwhen the harrowing robot is moving in a reverse direction. In further embodiments, the control unit is configured to control the drive mechanism, e.g. with the control signal, to arrange the breaking element in the soil disengaging position when the harrowing robot is moving in a reverse direction.

In embodiments, the drive mechanism is further configured to move the grader element, wherein in the first soil engaging position the grader element is configured to be at a first grader height. For example, in the soil disengaging position the grader element is configured to be at a second grader height, wherein the first grader height differs from the second grader height. The first grader height may e.g. be such that the grader element engages the broken up or softened soil, or at least a part of said soil that is arranged higher than the desired ground level. The second grader height may be such that the grader element does not engage the broken soil.

Optionally drive mechanism is configured to control a grader pressure which is exerted by the grader element onto the soil. For example, in the first soil engaging position the grader element exerts a first grader pressure and in the second soil engaging position the grader exerts a second grader pressure. Optionally in the second soil engaging position the breaking element is arranged deeper into the soil and the grader pressure is greater, in comparison with the first soil engaging position.

In embodiments, the harrowing mechanism may comprise a resilient member, e.g. a spring, configured to bias the grader element towards the soil. The resilient member ensures that the grader element is in contact with the broken-up soil, so that it can be flattened.

In embodiments, the control unit is configured to control the position of the breaking element among the plurality of positions based on a soil roughness and/or density of the soil into which the breaking element engages. For example, the control unit may be configured to arrange the breaking element in a position wherein the breaking depth is deeper as the soil roughness and/or density decreases. For example, the control unit may be configured to arrange the breaking element in the first soil engaging position if the soil roughness and/or density is in a first interval, and in the second soil engaging position if the soil roughness and/or density is in a second interval, wherein e.g. the first breaking depth is deeper than the second breaking depth and in the first interval the soil is less rough than in the second Ointerval.

The roughness and/or density of the soil may determine how easily the breaking element can break up the soil. If the soil is too rough or dense, it may be harder to break up the soil and there may be a risk that the breaking element gets stuck. In particular when the harrowing mechanism is arranged on a harrowing robot, an available propulsion force for moving the harrowing robot may be relatively low compared to the tractors that are traditionally used for moving the harrowing mechanism. In embodiments, the control unit may be configured to arrange the breaking element in the soil disengaging position if the soil roughness and/or density exceeds a predetermined value.

In embodiments, the harrowing robot may further comprise sensing means for sensing the soil roughness and/or density, based on which the control unit controls the position of the breaking element among the plurality of positions. For example, the control unit may be configured to receive a sensing signal from the sensing means, wherein the sensing signal is indicative of the soil roughness and/or density. The control unit can be configured to determine, e.g. in a processing unit, a control signal for the drive mechanism based on the sensing signal. Optionally the control unit is configured to determine the soil roughness and/or density based on the sensing signal, e.g. in an intermediate step.

In embodiments, the harrowing robot comprises a propulsion motor configured to move the harrowing robot over the soil using a propulsion force, wherein the sensing means senses the soil roughness and/or density based on the propulsion force necessary to move the harrowing robot. For example, the rougher the soil is, the larger the propulsion force required to move the harrowing robot when the breaking element is engaging the soil. Furthermore, the deeper the breaking element is arranged in the soil, the larger the propulsion force required to move the harrowing robot. The control unit can e.g. be configured to receive the sensing signal from the propulsion motor, wherein the sensing signal represents the propulsion force, and be configured to determine the control signal for the drive mechanism based on said sensing signal and the position of the breaking element. For example, when the propulsion motor is an electric motor, the sensing means may determine the motor current, for example the sensing means may be a current sensor or based on an input current. Optionally also the speed of the harrowing robot is taken into account.

In embodiments the control unit comprises a wireless communication terminal. The wireless communication terminal may e.g. be configured to receive wireless instructions and/or transmit wireless notifications. The wireless communication terminal may e.g. be configured to be in communication with a user equipment device. In some embodiments the user equipment device is a remote configured to control the harrowing robot. In some embodiments the user equipment device is a mobile communication device, such as a smartphone, tablet, computer, etc. Optionally a mobile application is installed on the user equipment device or operable via a browser from the user equipment device, wherein an operator can input a desired position of the breaking element into said mobile application. Optionally the wireless communication terminal is configured to be connected to a remote server, wherein the remote server is configured to be connected to the user equipment device for providing communication between the user equipment device and the wireless communication terminal.

The wireless communication terminal may e.g. be configured to receive wirelessly a position control signal, wherein the control unit is configured to control the position of the breaking element among the plurality of positions based on the received position control signal. Advantageously, the position of the breaking element can be controlled remotely. An operator can e.g. change the position of the breaking element when he notices from a distance that this is desired, e.g. because the soil roughness and/or density requires a larger or smaller breaking depth, or when the harrowing robot is stuck in the soil, or when the soil is not being harrowed as desired.

In embodiments, the harrowing mechanism further comprises a final grader element configured to grade the soil broken by the breaking element and/or flattened by a grader element. For example, the final grader element can be arranged behind the grader element when seen in a driving direction. By final grader the soil, it looks more aesthetically pleasing to the eye. It is noted that the harrowing mechanism can comprise both the grader element and the final grader element, but it is also possible that only one of both is provided, or even neither.

In embodiments, the final grader element comprises a non-driven rotatable element which rotates when the harrowing robot moves, e.g. a cylinder. For example, the rotatable element may be arranged to be in contact with the soil, and the movement of the harrowing robot and friction between the soil and rotatable element cause the rotatable element to rotate. The rotation efficiently grades the soil.

In embodiments, the drive mechanism may be configured to move the cylinder between a plurality of positions. For example, the plurality of positions may comprise a first cylinder soil engaging position wherein the cylinder engages the soil at a first cylinder height and with a first cylinder force; and a second cylinder soil engaging position wherein the cylinder engages the soil at a second cylinder height and with a second cylinder force. The first cylinder height differs from the second cylinder height and/or the first cylinder force differs from the second cylinder force. For example, the plurality of positions may comprise the first cylinder soil engaging position and a cylinder soil disengaging position.

In embodiments, the final graderelement is configured to function as a wheel, e.g. a rear wheel, of the harrowing robot. For example, the harrowing robot may comprise at least one front wheel, which can e.g. be driven by a propulsion motor, and the final grader element as rear wheel. Advantageously an additional rear wheel can be omitted, reducing the number of components of the harrowing robot and thereby simplifying the construction and maintenance, as well as reducing cost. In case no further wheels are provided behind the final grader element, it is also ensured that there are no wheel tracks left in the soil.

Optionally additional wheels are arranged between a front wheel axis and the final grader element, or behind the final grader element when seen in a driving direction. Said additional wheels may e.g. be swivel wheels. Said swivel wheels are optionally small, e.g. such that a diameter of the final grader element and/or the front wheel is larger than a diameter of the swivel wheels, e.g. at least two times larger, preferably at least three times larger, more preferably at least four times larger. Such swivel wheels may in particular be advantageous to enable turning of the harrowing mechanism, i.e. changing the driving direction, or driving in a reverse direction.

In embodiments, the breaking element and preferably also the grader element is/are arranged between a front wheel axis and a rear wheel axis. By arranging the breaking element accordingly, the weight of the harrowing mechanism and the forces exerted onto the harrowing mechanism by the soil are distributed better over the front and rear of the harrowing robot. In conventional arrangements, on the other hand, the breaking element drags behind the rear wheels and a large majority of the weight and forces are carried by the components at the rear. The arrangement according to the present embodiment thus allows providing components that need to be less strong, thereby reducing manufacturing costs of the harrowing robot. Furthermore, with a harrowing robot it may be advantageous that more weight is carried by the front wheel or front wheels to avoid slipping. The front wheel axis extends through a centre of rotation of the front wheel or front wheels, the rear wheel axis extends through a centre of rotation of the rear wheels or of the final grader element when said final grader element functions as rear wheel. In this embodiment it is further particularly advantageous if said final grader element functions as rear wheel, because in that case there is no additional rear wheel behind the final grader element that would cause rear wheel tracks in the already graded soil.

In embodiments the harrowing robot comprises a front part comprising at least one front wheel, and a rear part comprising at least the breaking element and preferably also the grader element, and/or the final grader element when present. The front part is pivotable relative to the rear part so that the front part pivots relative to the rear part, when the robot is steered or changes its direction. For example, the front part may be connected to the rear part by a pivot. A pivot may be advantageous instead of a ball joint which is traditionally used in arrangement where the harrowing mechanism is towed behind a man-operated vehicle, because a pivot only a rotational degree of freedom in one direction. In particular if the front part only comprises one or two front wheels, it is not desired in view of stability that the rear part can rotate in all directions as with a ball joint.

In embodiments the harrowing robot comprises a propulsion motor configured to move the harrowing robot over the soil in a driving direction using a propulsion force, and a steering mechanism configured to change the driving direction. Advantageously to harrowing robot is able to drive on itself, thus without needing to be connected to a tractor or other main vehicle or man-operated vehicle for dragging the harrowing mechanism behind it.

The propulsion motor is preferably an electrical motor. The harrowing robot may further comprise a battery for providing energy to the electrical motor, wherein said battery can e.g. be charged. Optionally a docking station is provided to which the harrowing robot can be connected in between harrowing operation, wherein the docking station is configured to charge the battery. The docking station can in turn be connected to a mains. Optionally the harrowing robot is configured to return autonomously to the docking station when the energy level of the battery is below a predetermined threshold value, e.g. 10 % or 5 %. Optionally the harrowing robot comprises at least one solar panel, wherein the solar panel is configured to convert solar energy into electrical energy for charging the battery and/or powering the electrical motor. It is also possible that the harrowing robot comprises a fuel cell arrangement for converting energy in hydrogen into electrical energy for powering the propulsion motor. In embodiments it is also possible that the propulsion motor is a combustion engine, e.g. powered by a carbon-based fuel, which may in particular be advantageous when the harrowing robot is provided for harrowing large outdoor soils where no electricity is available.

The steering mechanism can e.g. be connected to the front wheel or front wheels of the harrowing robot for turning said front wheel, thereby changing the driving direction of the harrowing robot.

In embodiments the control unit is configured to autonomously drive the harrowing robot by controlling the propulsion force and the driving direction. Advantageously, the robot can drive autonomously and harrow the soil. No operator is required to spend several hours for harrowing the soil, thereby significantly reducing operation cost. Furthermore, the harrowing robot can harrow the soil at night in between two days wherein the soil is used, e.g. for horse riding. It is thus no longer required to perform the harrowing during working hours, thereby increasing the time that the soil is available for use during said working hours. For example, the control unit may be configured to generate a propulsion signal and transmit the propulsion signal to the propulsion motor. For example, the control unit may be configured to generate a steering signal and transmit the steering signal to the steering mechanism.

In embodiments, the harrowing robot comprises an obstacle avoidance system comprising at least a first sensor configured for detecting an obstacle and configured to generate a first sensor signal. The control unit is configured to control the propulsion force and the driving direction based on the first sensor signal. The obstacle avoidance system allows the harrowing robot to avoid driving into obstacles. Such obstacles can for example be present when the soil is used for sporting events, e.g. on equestrian soils the obstacles may be intended for the horses to jump over during competition or training. By providing the obstacle avoidance system the harrowing robot can avoid the obstacles, and it is not necessary to remove the obstacles before harrowing, which otherwise would be time consuming. The obstacles can also be walls delimiting the soil to be harrowed, or people or animals on the soil. The obstacle avoidance system may thus have a dual function: on the one hand avoiding obstacles and controlling navigation of the harrowing robot, and on the other hand providing safety by avoiding that the harrowing robot hits a person or animal on the soil. The sensor can e.g. have a detection area in front of the harrowing robot. Based on the sensor signal, the control unit can determine when the harrowing robot is moving towards an obstacle. When the obstacle is detected, the control unit can control the driving direction, e.g. by means of the steering signal, so that the obstacle is avoided. Optionally the control unit controls the propulsion force, e.g. by means of the propulsion signal, to slow down the harrowing robot while changing the driving direction. This may guarantee the stability of the harrowing robot. When an obstacle is too large or too close to drive around, the control unit may be configured to control the propulsion force to drive the harrowing robot in a reverse direction.

In embodiments, the obstacle avoidance system further comprises at least a second sensor for detecting an obstacle and configured to generate a second sensor signal, wherein the control unit is configured to control the propulsion force and the driving direction based on the second sensor signal, wherein preferably the first sensor and the second sensor apply different sensing techniques. By applying two different sensing techniques, the obstacle avoidance system is able to detect a wide range of obstacles in different situations. This is in particular advantageous, because the harrowing robot may encounter different types of obstacles in the envisaged applications such as equestrian soils.

In embodiments, the first sensor and optionally the second sensor apply a sensing technique chosen from: sonar, LIDAR (Light Detection And Ranging of Laser Imaging Detection And Ranging), millimetre wave (mmWave), Time-of-flight (ToF) camera, stereo camera, 3D camera.

In embodiments, the obstacle avoidance system may comprise a plurality of first sensors applying the first sensing technique and/or a plurality of second sensors applying the second sensing technique.

In embodiments the first sensor applies a wave-based sensing technique, preferably millimetre wave. This are electromagnetic waves having extremely high frequency (EHF) in the electromagnetic spectrum from 30 to 300 gigahertz. This sensor has the advantage that it provides a relatively wide viewing angle.

In embodiments, the second sensor is a camera, preferably a 3D-camera. It has been found that it can in particular be advantageous to combine the millimetre wave technique of the first sensor with the second sensor being a camera when the harrowing robot is used for harrowing equestrian soils. On such equestrian soils, the obstacles are e.g. obstacles for horses to jump over. It has been found that the combination of these sensing techniques is especially efficient in detecting such obstacles.

In embodiments, the harrowing robot further comprises a location system configured to determine a location of harrowing robot. The location system may e.g. comprise geo-location system or a GPS-system. The location system may e.g. comprise a location sensor which communicates with one or more position beacons for determining the location of the harrowing robot. The location sensor may e.g. apply ultra-wideband technology.

In embodiments, the harrowing robot, e.g. the obstacle avoidance system of the harrowing robot, further comprises a bumper, e.g. a front bumper and/or a rear bumper. The bumper is configured to dampen a shock when the harrowing robot comes into contact with an obstacle, thereby protecting the harrowing robot from being damaged. The bumper can e.g. comprise a damper such as an elastomeric material or a spring. Optionally the bumper comprises a bumper sensor configured to sense when the harrowing robot comes into contact with an obstacle and configured to generate a bumper signal, wherein the control unit is configured to receive the bumper signal and control the driving direction and/or propulsion force based on the bumper signal.

In embodiments, the harrowing robot may be configured to cooperate with beacons or a perimeter wire. For example, beacons can be arranged on locations to delimit of a region of the soil to be harrowed. For example, a perimeter wire can be arranged to delimit of a region of the soil to be harrowed. The harrowing robot may comprise a perimeter sensor configured to generate a perimeter signal, wherein the control unit is configured to determine, based on the perimeter signal, when the harrowing robot approaches or passes a beacon, a virtual beacon line between two beacons, or a perimeter wire. The control unit may then be configured control the propulsion force and/or the driving direction such that the harrowing robot remains on the region of the soil to be harrowed.

In embodiments, the control unit is configured to move the harrowing robot according to a harrowing path. In embodiments, the harrowing path may e.g. entail the harrowing robot driving around until the driving direction needs to be changed, e.g. because of an obstacle or a beacon, then making a required change in the driving direction, driving again until the driving direction needs to be changed, and so on. In this case the harrowing path is relatively random, but it can be assumed that if the harrowing robot drives around for sufficiently long a sufficient region of the soil is harrowed. In embodiments, the harrowing path is a predetermined path, which may e.g. be determined by an operator, e.g. by means of the user equipment device. Optionally the operator can also control the driving direction and propulsion force with the user equipment device during use. In embodiments, the harrowing path is determined to be straight parallel lines covering the soil to be harrowed, wherein the harrowing robot is configured to avoid an obstacle on the straight line and return to the straight line after avoiding the obstacle.

The invention further relates to a method for harrowing a soil of an indoor or outdoor animal or sport arena, such as an equestrian soil. Although the method can be performed with the harrowing mechanism or harrowing robot according to the invention; neither the method nor the harrowing mechanism and harrowing robot are limited thereto. Features explained with reference to the harrowing mechanism and harrowing robot have the same meaning with respect to the method unless explicitly defined otherwise, and can be applied mutatis mutandis to the method to achieve the described advantageous effects.

In embodiments, the method comprises a step of harrowing the soil using a harrowing robot or harrowing mechanism, preferably according to one or more of the embodiments of the invention.

In embodiments, the method comprises a step of sending a start signal to a control unit of a harrowing robot, wherein the control unit is configured to control a propulsion force and a driving direction of the harrowing robot to start an autonomous harrowing operation. The start signal may e.g. be provided via a start button on the harrowing robot, or remotely using a user equipment device which is in connection with a wireless communication terminal of the harrowing robot. It is also possible that a predetermined start-time is set for the generating the start signal, which can e.g. be saved in a memory, and which e.g. can be set using the user equipment device or directly on the harrowing robot.

Exemplary embodiments of the invention are described using the figures. It is to be understood that these figures merely serve as example of how the invention can be implemented and are in no way intended to be construed as limiting for the scope of the invention and the claims. The figures are schematic, and it is to be understood that for the sake of clarity features may be omitted in some of the figures. Like features are indicated by like reference numerals along the figures. In the figures:
Fig 1a shows an isometric view of a harrowing robot according to the invention in a first embodiment;
Fig. 1b-1d shows side views of the first embodiment, wherein the breaking element is arranged at different positions with breaking depths;
Fig. 1e shows a top view of the first embodiment;
Fig 2a shows an isometric view of a harrowing robot according to the invention in a second embodiment;
Fig. 2b shows a side view of the second embodiment;
Fig. 2c shows a top view of the second embodiment;
Fig. 3 schematically illustrates the control unit of the harrowing robot.

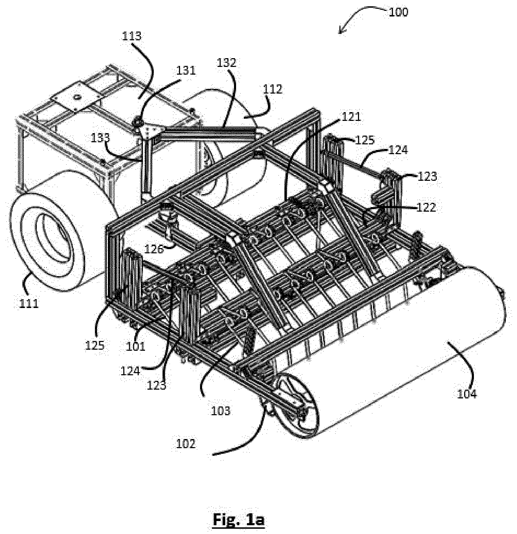

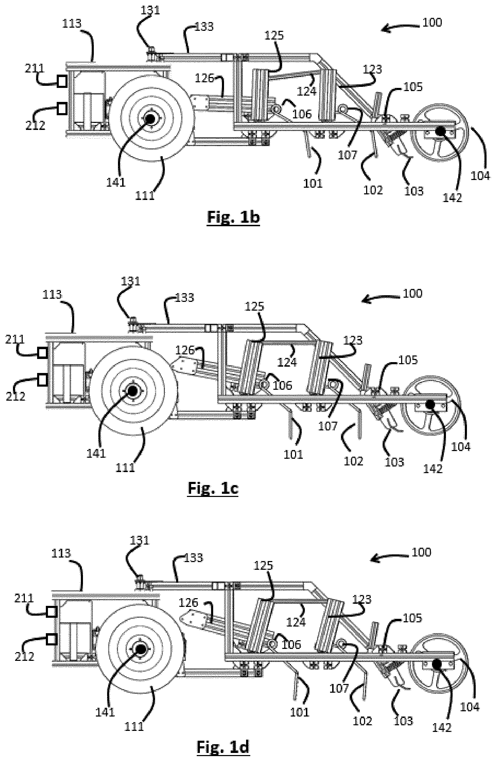

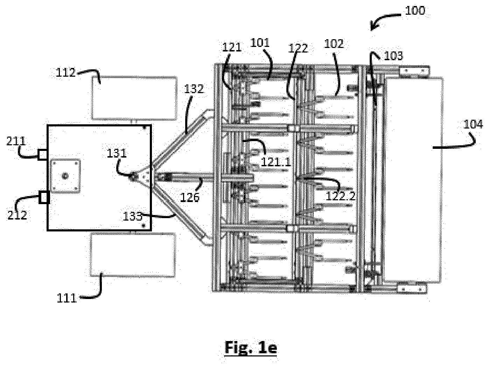

Fig. 1a-1e show a first embodiment of a harrowing robot 100 according to the invention, wherein fig. 1a shows an isometric view, figs. 1b-1d shows side views, and fig. 1e shows a top view. The harrowing robot 100 is an equestrian harrowing robot for harrowing equestrian soil, which can be indoor or outdoor. Nevertheless, the invention can also be applied to other harrowing applications, e.g. sport or animal arenas, e.g. a bull arena. In general, the invention is envisaged to be preferably applied in non-agricultural harrowing applications.

The harrowing robot 100 comprises a harrowing mechanism, which in the shown example comprises a breaking element 101,102, a grader element 103 and a final grader element 104.

The breaking element 101,102 comprises a first row of protrusions 101 and a second row of protrusions 102. The protrusions 101, 102 are teeth which during use are arranged in a soil engaging positions in which they are arranged in the soil at a breaking depth. As the harrowing robot 100 moved forward, the breaking element breaks up and/or softens the soil. The protrusions 101, 102 comprise a spring element 106, 107 (see figs. 1b-1d) for allowing some movement in the soil during use. As is best visible in fig. 1e, the first row of protrusions 101 is connected to a first breaking element holder 121 in groups of two, and the second row of protrusions 102 is connected to a second breaking element holder 122 in groups of two. The first row of protrusions 101 and the second row of protrusions 102 are arranged alternately when seen in a direction of the width (the vertical direction of the paper in fig. 1e) of the harrowing robot 100, which allows to break up the soil more efficiently. It will be understood that the breaking element 101, 102 can be implemented many different ways, e.g. with only a single row of protrusions or more than two rows or protrusions.

The grader element 103 is arranged behind the breaking element 101, 102 when seen in a general driving direction of the harrowing robot 100, and therefore engages the soil broken up by the breaking element 101, 102 during use of the harrowing robot 100. In the shown example the grader element 103 is embodied by a curved plate.

The breaking element 101, 102 and grader element 103 together perform the functionalities that are conventionally considered harrowing. The goal of harrowing a soil can generally be considered as manipulating the soil to make it more fit for its purpose. In the case of equestrian harrowing, the harrowing is performed to make the equestrian soil better for the horse to maneuver over. It could for example occur that local clumps of soils are formed by horses that have previously been on the soil, or by machinery that has been moved over the soil. It can also happen that the soil is harder than desired. In these cases, the breaking element 101, 102 is used to break up the soil and make it looser, however this may result in a rather random or messy soil because the breaking element 101, 102 sorts loose parts of soil together. The grader element 103 is therefore used to flatten the loose soil and even it out.

The grader element 103 is connected to a resilient member 105 (see figs. 1b-1d). The resilient member 105 biases the grader element 103 to the soil, to ensure that the grader element 103 is in contact with the broken-up soil. At the same time, the resilient member 103 allows some movement of the grader element 103.

Depending on the soil, e.g. how rough it is, is may be preferred that the breaking element 101, 102 is arranged at a different depth in the soil. It is therefore preferred that the harrowing robot 100 comprises a drive mechanism for moving the breaking element 101, 102 between a plurality of positions. Said plurality of positions may e.g. comprise a first soil engaging position wherein the breaking element 101, 102 is configured to be at a first breaking depth in the soil. This is shown in fig. 1c. In addition, the plurality of positions may include a second soil engaging position wherein the breaking element 101, 102, is configured to be at a second breaking depth in the soil, wherein the first breaking depth differs from the second breaking depth. The second breaking depth is shown in fig. 1d. The plurality of positions may also comprise a soil disengaging position wherein the breaking element 101, 102 is configured to be disengaged from the soil. This is shown in fig. 1b. It will be understood that although only three positions are shown, the plurality of positions can include more positions, e.g. at breaking depths between those shown in figs. 1b-1d.

In the shown embodiment, the drive mechanism is able to move the breaking element 101, 102 between the plurality of positions shown in figs. 1b-1d as follows. As indicated above, the first 101 and second row or protrusions 102 are arranged on the first 121 and second breaking element holder 122, respectively. The first 121 and second breaking element holder 122 are moveable, and can in particular be hinged into more vertical or horizontal positions, wherein a first holder rear end 121.1 and second holder rear end 122.1 (see fig. 1e) remain in a fixed position relative to the rest of the harrowing robot 100. As the first 121 and second breaking element holder 122 are moved, the first 101 and second row of protrusions 102, respectively, are moved as well, such that the respective protrusions are arranged at a different depth in the soil or height above the soil.

The first breaking element holder 121 is connected to a drive mechanism connector 126. The drive mechanism connecter 126 in turn is connected to a drive mechanism motor, which is not visible in the drawings because it is arranged in a housing 113. The drive mechanism motor is configured to move the drive mechanism connector 126 and thereby also move the first breaking element holder 121 to move the first row of protrusions 101. The first breaking element holder 121 is on both the left side and the right side connected to a first holder coupler 125. The first holder couplers 125 are each in turn connected to a second holder coupler 123 by means of a coupling bar 124. The second holder couplers 123 are connected to the second breaking element holder 122. The first holder couplers 125 and the second holder couplers 123 can also be hinged, such that movement of the first breaking element holder 121 by the drive mechanism connector 126 causes the second breaking element holder 122 to move as well via the first holder couplers 125, the coupling bars 124, and the second holder couplers 123. The first row of protrusions 101 and the second row of protrusions 102 are thus moved simultaneously to the same breaking depth in the soil or height above the soil.

Although the soil is suitable for its purpose, e.g. accommodating horses, after being flattened by the grader element 103, it is possible that the result is not completely visually pleasing. The inventors have therefore envisaged the option of providing the final grader element 104 is behind the grader element 103 when seen in the general driving direction. However, it is also possible to provide the final grader element 104 instead of the grader element 103, or to provide neither of both. The final grader element 104 thus engages the soil that has been flattened by the grader element 103 during use, thereby making the soil more visually pleasing.

In the shown example the final grader element 104 is embodied as cylinder, which is a non-driven rotatable element that rotates as the harrowing robot 100 moves. Advantageously, the final grader element 104 is used as rear wheel of the harrowing robot 100. It is thus not necessary to provide additional rear wheels. Furthermore, it this example there are no further wheels provided behind the final grader element 104, which avoids that wheel tracks made by such further wheels would remain in the soil after the harrowing robot 100 has passed.

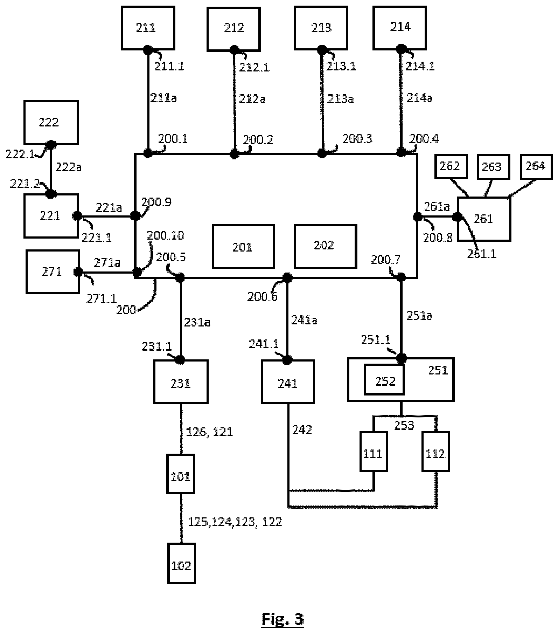

The harrowing robot 100 further comprises a front part which comprises a left front wheel 111, a right front wheel 112, and the housing 113. In the housing 113, a propulsion motor (not shown) is provided for providing a propulsion force, which drives the front wheels 111, 112 for moving the equestrian robot 100. The propulsion motor can e.g. be an electrical motor, for which a battery is also provided in the housing 113. Optionally two electrical motors can be provided, one for the left front wheel 111 and one for the right front wheel 112. In that case the driving direction of the harrowing robot 100 can changed by going faster with one of the left 11 or right front wheel 112 in comparison to the other. It is also possible that a steering mechanism (not shown) is provided in the housing 113 for turning the wheels 111, 112 to change the driving direction of the harrowing robot 100. Also a control unit is provided in the housing 113, which is elaborated on in more detail further below with reference to fig. 3.

Fig. 1a-1c further show that the harrowing robot 100 comprises a pivot 113. Besides the front part also a rear part can be defined, which comprises among others the breaking element 101, 102, the grader element 103, and the final grader element 104. The pivot 113 allows to pivot the front part relative to the rear part when the harrowing robot 100 is steered. The rear part is connected to the pivot by a first pivot connecting bar 132 and a second pivot connecting bar 133. Also the drive mechanism connector 126 is connected by a pivot in the housing 113.

Fig. 1b illustrates that the breaking element 101, 102 and the grader element 103 are arranged between a front wheel axis 141 and a rear wheel axis 142. This allows that the forces exerted by the soil onto the breaking element 101, 102 are distributed better over the harrowing robot 100, contrary to conventional harrowing mechanisms where the breaking element is dragging behind main vehicle or man-operated vehicle such as a tractor. The parts of the harrowing robot 100 in fig. 1a-1c can therefore be dimensioned lighter which reduces costs and weight, what in turn also allows to dimension the propulsion motorsmaller and reduce the energy usage during harrowing. Furthermore, more weight is carried by the front wheels 111, 112 which reduces slipping of said front wheels 111, 112.

In fig. 1b and 1c it is further schematically illustrated that the harrowing robot 100 comprises a first sensor 211 and second sensor 212, which may be part of an obstacle avoidance system. The first sensor 211 preferably applies a wave-based sensing technique, preferably millimeter wave. The second sensor 212 preferably is a camera, preferably a 3D-camera. It has been found that this combination of sensors is particularly advantageous to detect obstacles on equestrian soils. The wave-based sensing technique is advantageous with the bad weather conditions like rain and wind, as well as for detection of metallic obstacles. Other types of common obstacles on equestrian soils, such as small obstacles in wood or plastic, can be better detected by the camera. Generally the camera works well for detecting all kinds of objects but is less accurate in bad weather conditions. By combining both techniques, the inventors have found a practical and relatively cheap solutions to detect all types of common obstacles on equestrian soils in all weather conditions.

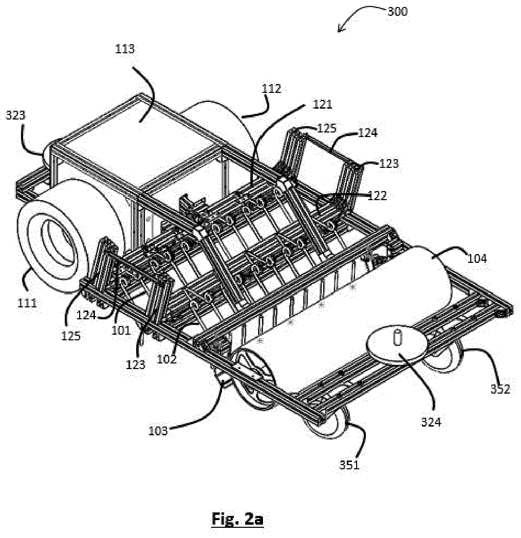

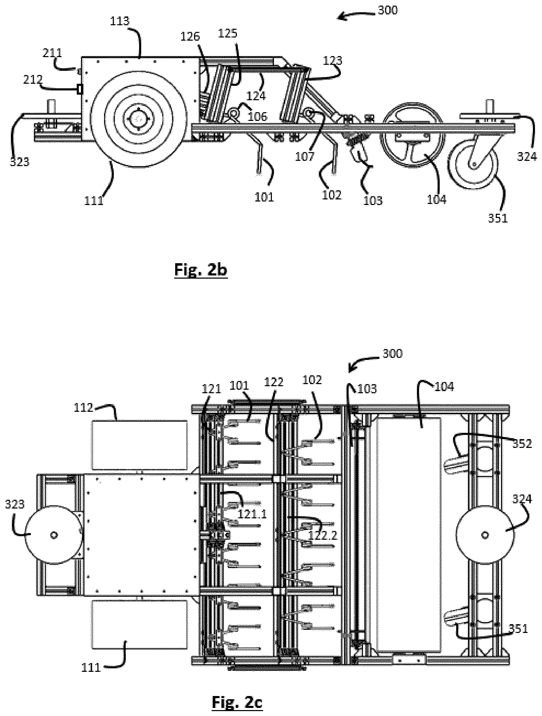

Fig. 2a-2c show a second embodiment of a harrowing robot 300 according to the invention, wherein fig. 2a shows an isometric view, fig. 2b shows a side view, and fig. 2c shows a top view. Features that are the same or similar to the first embodiment shown in fig. 1a-1c are indicated with the same reference numeral in fig. 2a-2c and will not be explained again.

The second embodiment differs from the first embodiment in that it does not comprise a pivot. To enable the harrowing robot 300 to turn, it is provided with two swivel wheels 351, 352, in particular a left swivel wheel 351 and a right swivel wheel 352.

In fig. 2b it can be seen that the final grader element 104 is arranged higher than the swivel wheels 351, 352. This may e.g. be useful when no harrowing is desired of when the harrowing robot need to turn. Thereafter the swivel wheels 351, 352 be arranged higher, such that the final grader element 104 come into contact with the soil.

Figs. 2a-2c further illustrate that optionally a front weight 323 and/or a rear weight 324 can be provided to arrange additional weight on the front wheels 111, 112 and swivel wheels 351, 352, respectively. This may be advantageous to prevent the respective wheels from slipping.

Although not shown in the figures, the harrowing robots 100, 300 can further comprise a front bumper and a rear bumper for detecting when the harrowing robot 100, 300 comes into contact with an obstacle. The bumpers may e.g. comprise an elastomeric material for dampening the shock and protecting the harrowing robot 100, 300 from damage.

Fig. 3 schematically illustrates the control unit 200 of the harrowing robot, which can e.g. be arranged in the housing of the harrowing robot shown in the previous figures. The control unit 200 is e.g. configured to control the drive mechanism for moving the breaking element 101, 102 between the plurality of positions.

In the shown example, the drive mechanism comprises a drive mechanism motor 231. The control unit 200 is configured to generate a control signal 231 a for controlling the drive mechanism, which in this embodiment is transmitted to the drive mechanism motor 231 via communication terminal 200.5 and communication terminal 231.1. Based on the control signal 231 a the drive mechanism motor 231 moves the breaking element 101, 102. In examples described in figs 1a-1c and 2a-2c the drive mechanism motor 231 moves the first row of protrusions 101 by means of the drive mechanism connector 126 and the first breaking element holder 121. This in turn causes the second row of protrusions 102 to move via the first holder couplers 125, the coupling bars 124, the second holder couplers 123, and the second breaking element holder 122.

Also schematically illustrated in fig. 3 is the propulsion motor 251, which can e.g. be embodied as an electrical motor. The propulsion motor 251 is configured to provide a propulsion force 253 to the left wheel 111 and the right wheel 112 for moving the harrowing robot over the soil. The control unit 200 is configured to generate a propulsion signal 251 a for controlling the propulsion motor 251, in particular the propulsion force 253. The propulsion signal 251 a is transmitted via communication terminal 200.7 and communication terminal 251.1. It is possible that the control unit 200 determines the propulsion force 253 to be delivered by the propulsion motor 251, but is also possible that the propulsions signal 251 a relates to a desired speed which is converted by the propulsion motor 251 to the propulsion force 253. The harrowing robot may comprise a speed sensor for determining the actual speed, e.g. based on the rotation speed of the wheels 111, 112 or based on a positioning system or location system where the speed is determined based on the change of position.

It may in particular be advantageous if the position of the breaking element 101,102 is controlled among the plurality of positions the based on a soil roughness and/or density of the soil into which the breaking element 101,102 engages. When the soil is rougher, it will require a higher propulsion force 253 to move the harrowing robot if the breaking element 101, 102 remains at the same breaking depth. Whereas traditionally the harrowing mechanism is towed around by a tractor which is able to provide very high propulsion force, the present invention can be implemented in a harrowing robot. It may be advantageous in view of pricing, energy consumption, and design constraints that the propulsion motor 251 is limited in size and maximal propulsion force 253. Consequently, it could happen that the propulsion force 253 is not large enough when the soil is too rough, which can be overcome if the control unit 200 can arrange the breaking element 101, 102 in a soil engaging position with a smaller breaking depth or even in the soil disengaging position in such situations.

Although it is also possible that an operator provides the soil roughness and/or density to the control unit 200, it may be more practical that the harrowing robot is able to sense the soil roughness and/or density. Therefore, a sensing means 252 can be provided for sensing the soil roughness and/or density. In the shown example, the sensing means 252 is incorporated in the propulsion motor 251, and senses the soil roughness and/or density based on propulsion force 253 necessary to move the harrowing robot. This can be transmitted to the control unit 200 via the propulsion signal 251 a or another signal, such that the control unit 200 can determine the soil roughness and/or density. Optionally the control unit 200 also takes the position of the breaking element 101, 102 and/or the speed of the harrowing robot into account.

Fig. 3 also schematically illustrates the steering mechanism 241. The steering mechanism 241 is configured to change the driving direction 242 of the harrowing robot by turning the left wheel 111 and the right wheel 112. Steering mechanisms for accomplishing this are known in the art. The control unit 200 can be configured to control the steering mechanism 241 by means of a steering signal 241 a, which is transmitted to the steering mechanism by communication terminal 200.6 and communication terminal 241.1.

By controlling the propulsion force 253 and the driving direction 242, the control unit 200 is able to autonomously drive the harrowing robot. Advantageously the harrowing robot can drive around on the soil and harrow it without requiring an operator to be in constant control or even be present.

When driving autonomously, the harrowing robot should of course be able to avoid driving into obstacles. For example, on an equestrian soil these obstacles include the jumping obstacles that horses jump over during jumping competitions. Such jumping obstacles are quite different from traditional obstacles that autonomous vehicles for other purposes encounter: they usually have several horizontal jumping bars that are arranged at a vertical distance of each other. Contrary to traditional obstacles, there may empty space at the bottom between the lowers jumping bar and the ground surface. Furthermore, the harrowing robot preferably is able to harrow both inside and outside equestrian soils, both during the day and at night.

The inventors have been able to provide the harrowing robot with an obstacle avoidance system that is able to accommodate the above requirements. The obstacle avoidance system therefore comprises a first sensor 211 and second sensor 212. The first sensor 211 applies a wave-based sensing technique, preferably millimetre wave. The first sensor 211 is configured to generate a first sensor signal 211a, which is transmitted to the control unit 200 via communication terminal 211.1 and communication terminal 200.1. Based on the first sensor signal 211a, the control unit 200 is able to detect when the harrowing robot is approaching an obstacle, and control the driving direction 242 and the propulsion force 253 in order to avoid hitting the obstacle. In particular, the control unit 200 may be configured to determine the steering signal 241 a and the propulsion signal 251 a based on the first sensor signal 211a.

The second sensor 212 is a camera, preferably 3D camera. The second sensor212 is configured to generate a second sensorsignal212a, which is transmitted to the control unit 200 via communication terminal 212.1 and communication terminal 200.2. Based on the second sensor signal 212a, the control unit 200 is able to detect when the harrowing robot is approaching an obstacle, and control the driving direction 242 and the propulsion force 253 in order to avoid hitting the obstacle. In particular, the control unit 200 may be configured to determine the steering signal 241a and the propulsion signal 251a based on the second sensor signal 212a.

As can be seen, the first sensor 211 and the second sensor 212 apply different sensing techniques. As explained above, the inventors have found that this combination is particularly advantageous for the envisaged applications, such as harrowing of equestrian soils.

Fig. 3 illustrates that the collusion system may further comprise a front bumper 213 and/or a rear bumper 214. The bumpers 213, 214 may also comprise a bumper sensor, which generates a front bumper signal 213a or rear bumper signal 214a, respectively, when the respective bumper 213, 214 comes into contact with an obstacle. The front bumper signal 213a can be communicated to the control unit 200 via communication terminal 213.1 and communication terminal 200.3. The rear bumper signal 214a can be communicated to the control unit 200 via communication terminal 214.1 and communication terminal 200.4. Based on the front bumper signal 213a or the rear bumper signal 214a, the control unit 200 can determine that the harrowing robot has come into contact with an obstacle, and control the steering signal 241a and the propulsion signal 251a to limit the contact and/or damage.

In the shown embodiment the harrowing robot further comprises a location system 261, which in this example comprises a geo-location system that comprises three beacons 262, 263, 264. By determining the distance to each of the beacons 262, 263, 264, the location system 261 is able to determine a relative location of the harrowing robot. Said relative location is communicated as a location signal 261a to the control unit 200 via communication terminal 261.1 and communication terminal 200.8. Alternatively it is possible that the control unit 200 determines the relative location, e.g. based on distances to the beacons 262, 263, 264. Based on the relative location, the control unit 200 can make sure that the harrowing robot e.g. follows a predetermined route, stays within a predetermined region, avoids known collusions, makes sure it limits the amounts that the same part of the soil is harrowed more than once, etc. Thus, the control unit 200 can be configured to determine the steering signal 241a and the propulsion signal 251a on the relative location. If the absolute locations of the beacons 262, 263, 264 are known, the control unit 200 can also determine the absolute position of the harrowing robot. It is also possible that the location system 261 comprises a GPS-system for determining the position on the harrowing robot based on GPS-signals.

The control unit 200 further comprises a first wireless communication terminal 200.10, which in the shown embodiment is in communication with a remote 271 by means of a remote signal 271a via a communication terminal 271.1. The remote 271 may be controlled by a user or operator who is in the vicinity of the harrowing robot. By means of the remote signal 271a, he can provide instructions to the control unit 200.

The control unit 200 further comprises a second wireless communication terminal 200.9, which in the shown embodiment is in communication with an external server 221 by means of a server communication signal 221a via a communication terminal 221.1. The external server 221 is usually located on a location different from the soil. The server 221 in turn is connected with a user equipment device 222 by means of a user signal 222a via communication terminal 221.2 and communication terminal 222.1. The server communication signal 221a and the user signal 222a can be transmitted via suitable communication techniques, such as 3G, 4G, 5G, Wi-Fi, etc. The user equipment device 222 can e.g. be a smartphone or computer owned by a user of the harrowing robot, and may or may not be located in the vicinity of the harrowing robot. The user can interact with harrowing robot via the server communication signal 221a and the user signal 222a. In other embodiments it is also possible that control unit 200 is directly connected with the user equipment device 222.

It will be understood that in practice it is also possible that the control unit 200 is only connected with one of the remote 271 and the external server 221. It is also possible that both the remote 271 and the external server 221 are connected to a single wireless communication terminal of the control unit 200.

The user may provide wireless instructions to the control unit 200 by using the remote 271 or the user equipment device 222. Such instructions may e.g. include: start harrowing; stop harrowing; harrow a specific region; change the position of the breaking element 101,102 among the plurality of positions by means of a position control signal; change the driving direction 242 and/or propulsion force 253; etc. The control unit 200 can also transmit wireless communications to the user, such as: status of harrowing process; status of battery; the harrowing robot has encountered a problem or is stuck, etc. The communication between the control unit 200 and the user equipment device 222 thus allows the user to control the harrowing process when he is keeping an eye on the harrowing robot or monitor the harrowing process when he is not able to keep an eye on the robot, e.g. when he is on a remote location.

Fig. 3 further illustrates that the control unit 200 may comprise a processing unit 201. The processing unit 201 can be configured to process any data that is required. For example, when in this text it is mentioned that the control unit 200 is configured to determine something, said processing may be performed in the processing unit 201.

The control unit 200 furthermore comprises a memory 202. The memory 202 may be configured to store any relevant data, algorithm, instructions, or the like. Computer readable instructions may be stored on the memory 202 that cause the processing unit 201 to perform any of the actions described above.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit 200 can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. Harrowing robot for harrowing a soil of an indoor or outdoor animal or sport arena, such as an equestrian soil, comprising:
a. a harrowing mechanism, comprising:
i. a breaking element configured to break up and/or soften the soil,
ii. a drive mechanism configured to move the breaking element between a plurality of positions comprising at least:
1. a first soil engaging position wherein the breaking element is configured to be at a first breaking depth in the soil, and
2. a second soil engaging position wherein the breaking element is configured to be at a second breaking depth in the soil, wherein the first breaking depth differs from the second breaking depth,
iii. a control unit configured to control the drive mechanism for moving the breaking element between said plurality of positions.

2. Harrowing robot according to claim 1, wherein the control unit is configured to control the position of the breaking element among the plurality of positions based on a soil roughness and/or density of the soil into which the breaking element engages.

3. Harrowing robot according to claim 2, further comprising sensing means for sensing the soil roughness and/or density based on which the control unit controls the position of the breaking element among the plurality of positions.

4. Harrowing robot according to claim 3, further comprising a propulsion motor configured to move the harrowing robot over the soil using a propulsion force, wherein the sensing means senses the soil roughness and/or density based on the propulsion force necessary to move the harrowing robot.

5. Harrowing robot according to one of the preceding claims, wherein the control unit comprises a wireless communication terminal configured to receive wirelessly a position control signal, wherein the control unit is configured to control the position of the breaking element among the plurality of positions based on the received position control signal.

6. Harrowing robot according to one of the preceding claims, wherein the plurality of positions further comprises a soil disengaging position wherein the breaking element is configured to be disengaged from the soil, wherein optionally the control unit is configured to control the drive mechanism to arrange the breaking element in the soil disengaging position when the harrowing robot is moving in a reverse direction.

7. Harrowing robot according to one of the preceding claims, wherein the harrowing mechanism further comprises a grader element configured to flatten the soil broken up by the breaking element, wherein the drive mechanism is further configured to move the grader element, wherein in the first soil engaging position the grader element is configured to be at a first grader height, and in the soil disengaging position the grader element is configured to be at a second grader height, wherein the first grader height differs from the second grader height.

8. Harrowing robot according to one of the preceding claims, wherein the harrowing mechanism further comprises a final grader element configured to grade the soil broken by the breaking element and/or flattened by a grader element, wherein the final grader element comprises a non-driven rotatable element which rotates when the harrowing robot moves, e.g. a cylinder,
wherein the final grader element is configured to function as rear wheel of the harrowing robot.

9. Harrowing robot according to one of the preceding claims, wherein the breaking element and preferably also the grader element is/are arranged between a front wheel axis and a rear wheel axis.

10. Harrowing robot according to one of the preceding claims, comprising
a. a front part comprising at least one front wheel, and
b. a rear part comprising at least the breaking element and preferably also the grader element,
wherein the front part is pivotable relative to the rear part so that the front part pivots relative to the rear part, when the harrowing robot is changes its driving direction.

11. Harrowing robot according to one of the preceding claims, further comprising:
a. a propulsion motor configured to move the harrowing robot over the soil in a driving direction using a propulsion force,
b. a steering mechanism configured to change the driving direction,
wherein the control unit is configured to autonomously drive the harrowing robot by controlling the propulsion force and the driving direction.

12. Harrowing robot according to claim 11, further comprising an obstacle avoidance system comprising at least a first sensor configured detecting an obstacle and configured to generate a first sensor signal, wherein the control unit is configured to control the propulsion force and/or the driving direction based on the first sensor signal,
wherein obstacle avoidance system further comprises at least a second sensor for detecting an obstacle and configured to generate a second sensor signal, wherein the control unit is configured to control the propulsion force and the driving direction based on the second sensor signal, wherein preferably the first sensor and the second sensor apply different sensing techniques.

13. Harrowing robot according to claim 12, wherein the first sensor applies a wave-based sensing technique, preferably millimetre wave, wherein the second sensor is a camera, preferably a 3D-camera.

14. Harrowing mechanism for harrowing a soil of an indoor or outdoor animal or sport arena, such as an equestrian soil, comprising:
i. a breaking element configured to break up and/or soften the soil,
ii. a drive mechanism configured to move the breaking element between a plurality of positions comprising at least:
1. a first soil engaging position wherein the breaking element is configured to be at a first breaking depth in the soil, and
2. a second soil engaging position wherein the breaking element is configured to be at a second breaking depth in the soil, wherein the first breaking depth differs from the second breaking depth,
iii. a control unit configured to control the drive mechanism for moving the breaking element between said plurality of positions,
wherein optionally the harrowing mechanism comprises any of the features listed in any of the claims 2-13.

15. Method for harrowing a soil of an indoor or outdoor animal or sport arena, such as an equestrian soil, comprising a step of harrowing the soil using the harrowing robot or harrowing mechanism according to one or more of the preceding claims.
